(19) Europäisches Patentamt
European Patent Office
Office européen des brevets

(11) **EP 4 502 111 B1**

(12) **EUROPEAN PATENT SPECIFICATION**

(45) Date of publication and mention of the grant of the patent:
**24.06.2026 Bulletin 2026/26**

(21) Application number: **22953980.4**

(22) Date of filing: **02.08.2022**

(51) International Patent Classification (IPC):
***G01B 11/24*** *(2006.01)* ***C10B 29/06*** *(2006.01)*
***C10B 45/00*** *(2006.01)*

(52) Cooperative Patent Classification (CPC):
**C10B 45/00; C10B 29/06; G01B 11/24**

(86) International application number:
**PCT/JP2022/029710**

(87) International publication number:
**WO 2024/028991 (08.02.2024 Gazette 2024/06)**

(54) **COKE OVEN LINING SHAPE MEASURING METHOD AND COKE OVEN WALL REPAIRING METHOD**

PROCÉDÉ DE MESURE DE FORME DE REVÊTEMENT DE FOUR À COKE ET PROCÉDÉ DE RÉPARATION DE PAROI DE FOUR À COKE

VERFAHREN ZUR MESSUNG DER FORM EINER KOKSOFENAUSKLEIDUNG UND VERFAHREN ZUR REPARATUR EINER KOKSOFENWAND

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.02.2025 Bulletin 2025/06**

(73) Proprietor: **JFE Steel Corporation**
**Tokyo 100-0011 (JP)**

(72) Inventors:
- **AKIYAMA, Seitaro**
  **Tokyo 100-0011 (JP)**
- **FUKUSHIMA, Yasumasa**
  **Tokyo 100-0011 (JP)**

(74) Representative: **Haseltine Lake Kempner LLP**
**Bürkleinstrasse 10**
**80538 München (DE)**

(56) References cited:
**JP-A- 2013 082 909** **JP-A- 2014 218 557**
**JP-A- 2016 038 386** **JP-A- 2016 038 386**
**JP-A- 2019 522 089** **JP-A- 2019 522 089**
**JP-A- 2020 002 320** **JP-A- 2020 002 320**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 502 111 B1

## Description

Technical Field

The present invention relates to an oven lining shape measuring method for measuring an oven lining shape of a carbonization chamber in a coke oven, and also relates to a coke oven wall repairing method.

Background

Coke ovens are used in the steel industry to produce coke from coal. Recently, there are a growing number of aging coke ovens that are 40 or more years old since construction. A coke oven is built by laying bricks while bonding them with thin mortar layers. The bricks are then fastened from the front, back, and both sides to maintain the shape as intended. The coke oven has a structure in which a regenerator is on the foundation, hollow spaces called carbonization chambers (about 6 m high, about 400 mm wide, and about 16 m deep) and combustion chambers (about 900 mm wide) for combustion of fuel gas are alternately arranged in the width direction on the upper side of the regenerator, and a brick ceiling is at the top.

In the coke oven, the carbonization chambers are heated to 1000°C or above by heat which is generated by combustion of fuel in the combustion chambers and passed through brick walls of the combustion chambers. Coal is then charged through charging holes at the top of the carbonization chambers and carbonized to produce coke. After the carbonization, a pusher ram is inserted through one of oven ports about 6 m high and about 400 mm wide at both ends of each carbonization chamber, so that a coke cake in the carbonization chamber is discharged through the other oven port. When construction of the coke oven is completed, fuel is internally combusted to gradually heat the bricks to 1000°C or above. The temperature of the bricks is kept until the coke oven is shut down.

A brick wall that separates the combustion chamber and the carbonization chamber is called an oven wall, which has the function of blocking the flow of combustion gas into the carbonization chamber, transferring combustion heat to the carbonization chamber, and supporting the ceiling. A ceiling load and a bracing force always act on the oven wall, whereas a pusher ram load and a pushing frictional force temporarily act on the oven wall during pushing. Although the ceiling load and the bracing force have the function of stabilizing the oven wall structure, the following problems occur in the oven wall as the coke oven becomes older.

(1) Joint breakage (i.e., gaps are created at joints in the oven wall);
(2) Loss (i.e., one or more bricks come off the oven wall);
(3) Erosion (i.e., bricks are worn and diminished in a wide surface of the oven wall); and
(4) Bulging (i.e., bricks in a wide surface of the oven wall fall toward the carbonization chamber).

Bricks may collapse if the oven wall having any of the problems listed above is subjected to a bracing force or a pushing force. If, for example, erosion, loss, or bulging causes irregularities in the oven wall, the distance (oven width) between surfaces of the oven walls on the right and left of the carbonization chamber deviates from the designed value, and this degrades the performance of pushing the coke. Therefore, in the event of erosion, loss, or bulging in the oven wall, a repair is carried out to restore the oven wall to a sound condition. That is, for example, erosion is corrected by spraying a monolithic material or applying build-up through thermal spraying, loss is corrected by replacement of bricks, and bulging is corrected by repairing bricks again.

Such a repair involves measuring the oven lining shape of the carbonization chamber and detecting damage to, or deformation of, the oven wall. As a method for measuring the oven lining shape of the carbonization chamber, Patent Literatures 1 and 2 each disclose a diagnostic method for examining the oven wall in the coke oven. In these diagnostic methods, a laser three-dimensional shape measuring device is installed outside the carbonization chamber, and the oven wall inside the carbonization chamber is irradiated with laser to measure the oven lining shape of the carbonization chamber.

Citation List

Patent Literature

PTL 1: Japanese Unexamined Patent Application Publication No. 2013-82909
PTL 2: Japanese Unexamined Patent Application Publication No. 2014-218557

## Summary of Invention

### Technical Problem

When the laser three-dimensional shape measuring device is used, the device is covered, for example, with heat resistant cloth for protection against radiant heat from the carbonization chamber. However, measuring the oven lining shape of the carbonization chamber involves irradiating the oven wall of the carbonization chamber with laser and receiving light reflected from the oven wall. This means that during measurement of the oven lining shape, a laser irradiation hole and a detection hole cannot be covered with the heat resistant cloth for protection against heat. Therefore, with the diagnostic methods for examining the oven wall disclosed in Patent Literatures 1 and 2, the oven lining shape cannot be measured due to deformation of the laser irradiation hole and the detection hole caused by radiant heat from the carbonization chamber.

The present invention has been made in view of the problem of the related art described above. An object of the present invention is to provide a coke oven lining shape measuring method that can prevent deformation of the laser irradiation hole and the detection hole caused by radiant heat from the carbonization chamber, and to also provide a coke oven wall repairing method.

### Solution to Problem

The present invention that can solve the problem described above is summarized below.

[1] A coke oven lining shape measuring method for measuring an oven lining shape in a coke oven includes installing a laser three-dimensional shape measuring device outside a carbonization chamber from which an oven door has been removed, and measuring an oven lining shape of the carbonization chamber with the laser three-dimensional shape measuring device. The oven lining shape is measured after time from removal of the oven door to start of measurement with the laser three-dimensional shape measuring device and a distance from a oven port to the laser three-dimensional shape measuring device are determined to satisfy inequality (1),

$$(10/t)/\{(L+4)/5.5\}^2 \times T_W^4 \leq 4.1 \times 10^{12} \cdots (1)$$

where $T_W$ is an oven temperature (K) of the carbonization chamber, t is time (min) from removal of the oven door to start of measurement with the laser three-dimensional shape measuring device, and L is a distance (m) from the oven port to the laser three-dimensional shape measuring device.

[2] In the coke oven lining shape measuring method according to [1], the time from removal of the oven door to start of measurement with the laser three-dimensional shape measuring device is 10 minutes or longer.

[3] In the coke oven lining shape measuring method according to [1] or [2], the time from removal of the oven door to start of measurement with the laser three-dimensional shape measuring device is within 60 minutes.

[4] A coke oven wall repairing method for repairing an oven wall in a coke oven includes repairing the oven wall of the carbonization chamber on the basis of the oven lining shape measured by the coke oven lining shape measuring method according to [1] or [2].

[5] A coke oven wall repairing method for repairing an oven wall in a coke oven includes repairing the oven wall of the carbonization chamber on the basis of the oven lining shape measured by the coke oven lining shape measuring method according to [3].

### Advantageous Effects of Invention

The present invention can prevent thermal deformation of the laser irradiation hole and the detection hole by determining the time from removal of the oven door of the coke oven to start of measurement and the distance from the oven port in such a way as to satisfy inequality (1). This makes it possible not only to measure the oven lining shape in the coke oven using the laser three-dimensional shape measuring device, but also to repair the oven wall in the coke oven on the basis of oven lining shape data obtained by the measurement.

### Brief Description of Drawings

[Fig. 1] Fig. 1 is a schematic perspective view illustrating how an oven lining shape of a carbonization chamber 10 is measured by a coke oven lining shape measuring method according to present embodiment.

[Fig. 2] Fig. 2 is a schematic diagram for explaining radiant heat emitted from the carbonization chamber. Description of Embodiments

Hereinafter, embodiments of the present invention will be described with reference to the drawings. The embodiments to be described are preferred examples of the present invention, and the present invention is not at all limited by the examples.

Fig. 1 is a schematic perspective view illustrating how an oven lining shape of a carbonization chamber 10 is measured by a coke oven lining shape measuring method according to the present embodiment. As illustrated in Fig. 1, the oven lining shape of the carbonization chamber 10 in a coke oven 1 is measured by a laser three-dimensional shape measuring device 20 installed on a platform 30 in front of the carbonization chamber 10. The laser three-dimensional shape measuring device 20 is a device configured to irradiate an oven wall 13 with laser 21 at an angle from a laser irradiation hole, through a oven port 11 with an oven door 12 removed, and receive light reflected from the oven wall 13 at a detection hole, so as to measure the oven lining shape of the carbonization chamber 10 as a point cloud.

The laser three-dimensional shape measuring device 20 preferably measures the oven lining shapes on the right and left of the carbonization chamber 10 separately. The carbonization chamber 10 is about 6 m high on the upper side, about 400 mm wide, and about 16 m deep. The oven port 11 is narrow about 400 mm wide and about 6 m high. If the oven lining shapes on both the right and left sides are measured at a time by irradiation with the laser 21 from outside the carbonization chamber 10, the incidence angle of the laser 21 on each oven wall 13 is shallow. If the laser 21 is incident at such a shallow angle and the oven wall 13 bulges out, the laser 21 cannot reach the back of the oven wall 13 in the shadow and the oven lining shape cannot be measured. On the other hand, when the oven lining shapes on the right and left are separately measured, the incidence angle of the laser 21 on the oven wall 13 is large enough to allow measurement of the oven lining shape even if the oven wall 13 bulges out.

The right and left oven lining shape data measured by the laser three-dimensional shape measuring device 20 may be evaluated separately. These two pieces of oven lining shape data may be combined on the basis of reference objects around the carbonization chamber 10 and evaluated as one piece of composite oven lining shape data. When two pieces of shape data are separately evaluated, irregularities of the oven wall 13 can be quantified by determining the mean plane from the measured point cloud and calculating the distance of each point from the mean plane. The calculation of the distance may be made by calculating the distance from each point in the normal direction to the mean plane, or by calculating the distance in the width direction of the carbonization chamber 10. Irregularities of the oven wall 13 can thus be identified using the two pieces of oven lining shape data.

To push the coke out of the carbonization chamber 10, a pusher ram about 350 mm wide is inserted into the carbonization chamber 10 which is about 400 mm wide. The distance between the right and left oven walls determines whether the pusher ram can smoothly pass through the interior of the carbonization chamber 10. The distance between the right and left oven walls is preferably calculated by using one piece of composite oven lining shape data generated by combining the right and left oven lining shape data on the basis of reference objects around the carbonization chamber 10.

Specifically, first, at least two dedicated reference bodies 22 are installed around the oven port 11, and the positions of the reference bodies 22 are measured simultaneously with the measurement of the oven lining shapes on the right and left. Next, the center position of the reference body 22 in each measured data is calculated. Since the positional relation between the reference bodies 22 does not change, a one-to-one correspondence between the center positions of the reference bodies 22 in the right and left oven lining shape data is found. One oven lining shape data is then moved to make these center positions coincide, so that the two pieces of oven lining shape data can be combined into one piece of composite oven lining shape data.

The reference bodies 22 may be dedicated ones that can only be used for the laser three-dimensional shape measuring device 20, or may be any objects in the vicinity of the carbonization chamber 10 whose positions are easily identifiable. A member called an door frame is disposed near the oven port 11. The door frame is replaced as it wears out, and mounted with reference to the oven walls 13. Therefore, the door frame may be used as a reference, in place of the reference bodies 22 described above. This clarifies the relative positional relation between the oven walls 13 on the right and left, and makes it possible to generate one composite oven lining shape data with high accuracy.

The coke oven width is tapered to make a coke cake less likely to rub against the oven wall when the coke cake is pushed out. That is, the oven width on the side from which the coke cake is pushed out is about 30 mm greater than the oven width on the side from which the pusher ram is inserted. That is, since the coke oven width has a taper of about 30 mm on both sides of the depth 16 m, there may be deviation in evaluation of irregularities made by using the mean plane calculated from individual oven lining shape data. On the other hand, by using the composite oven lining shape data generated by combining the right and left oven lining shape data, the degree of increase in oven width can also be identified. Therefore, by making a comparison with the design shape data, the irregularities of the oven wall 13 can be determined with accuracy.

The oven lining shape of the carbonization chamber 10 in the coke oven 1 can thus be measured by using the laser three-dimensional shape measuring device 20. Also, by comparing oven lining shape data obtained by measuring the oven lining shape of the carbonization chamber 10 with design shape data, the state of deformation of the oven wall 13 (i.e., irregularities of the oven wall, and changes in the oven width) can be detected. This facilitates repair of the oven wall 13 because the repair is carried out on the basis of the detected state of deformation.

When the oven door 12 of the carbonization chamber 10 is removed, the laser three-dimensional shape measuring device 20 installed on the platform 30 may failed to measure the oven lining shape, because the laser irradiation hole and the detection hole are deformed by radiant heat from the carbonization chamber 10.

Accordingly, in the coke oven lining shape measuring method according to the present embodiment, the time from removal of the oven door 12 of the carbonization chamber 10 to start of measurement of the oven lining shape with the laser three-dimensional shape measuring device 20 is determined before measurement of the oven lining shape of the carbonization chamber 10. By the passage of a predetermined period of time since removal of the oven door 12, the oven temperature of the carbonization chamber 10 is lowered and radiant heat from the carbonization chamber 10 is reduced. This prevents deformation of the laser irradiation hole and the detection hole, and makes it possible to measure the oven lining shape with the laser three-dimensional shape measuring device 20.

Specifically, when the oven temperature of the carbonization chamber 10 is 1150°C and the distance from the oven port 11 to the laser three-dimensional shape measuring device 20 is 1.5 m, the oven lining shape can be measured using the laser three-dimensional shape measuring device 20 without deformation of the laser irradiation hole and the detection hole if the laser three-dimensional shape measuring device 20 is installed and measurement starts 10 minutes after removal of the oven door 12 from the carbonization chamber 10.

The level of radiant heat from the carbonization chamber 10 varies depending on the oven temperature of the carbonization chamber 10, the time from removal of the oven door 12 to start of measurement, and the distance from the oven port 11 to the laser three-dimensional shape measuring device 20. Therefore, when $T_W$ is the oven temperature of the carbonization chamber 10, t is the time from removal of the oven door 12 to start of measurement of the oven lining shape, and L is the distance from the oven port 11 to the laser three-dimensional shape measuring device 20, the time t and the distance L are determined to satisfy inequality (1) described below. In the present embodiment, starting the measurement of the oven lining shape means starting the measurement of the oven lining shape after installing the laser three-dimensional shape measuring device 20, or starting the measurement of the oven lining shape after removing the heat resistant cloth which has covered the laser three-dimensional shape measuring device 20 for protection against heat.

$$(10/t)/\{(L+4)/5.5\}^2 \times T_W^4 \leq 4.1 \times 10^{12} \cdots (1)$$

Note that $T_W$ is the oven temperature (K) of the carbonization chamber 10, t is the time (min) from removal of the oven door 12 to start of measurement with the laser three-dimensional shape measuring device 20, and L is the distance (m) from the oven port 11 to the laser three-dimensional shape measuring device 20.

Thus, when the oven lining shape is measured after the time t and the distance L are determined, the shape of the oven wall 13 in the carbonization chamber 10 can be measured using the laser three-dimensional shape measuring device 20 without deformation of the laser irradiation hole and the detection hole.

Fig. 2 is a schematic diagram for explaining radiant heat from the carbonization chamber. Inequality (1) above will now be described using Fig. 2. The oven door 12 is installed at two locations, one being a coke side (from which coke is pushed out) and the other being a machine side (at which the pusher ram pushes the coke). Therefore, to measure the entire surface of the oven wall 13, it is simply required to measure the area from the oven port 11 on the side of each oven door 12 to the center (8 m) of the oven wall 13. A representative temperature position for the oven temperature of the carbonization chamber 10 is assumed to be the center position (i.e., 4-m position) of the 8-m section of the carbonization chamber 10 in the depth direction. Accordingly, radiant heat from this position is assumed to be radiant heat that is emitted after a predetermined period of time since removal of the oven door 12. The duration of the radiant effect of radiant heat is inversely proportional to the square of the distance. Therefore, the duration of the radiant effect at a position P2 at the distance L from the oven port 11 after 10 minutes since removal of the oven door 12 can be expressed by expression (2) with reference to radiant heat at a position P1 at a distance of 1.5 m from the oven port 11.

$$10/\{(L+4)/(1.5+4)\}^2 \cdots (2)$$

Radiant heat is proportional to the fourth power of the temperature. Expression (3) can thus be derived by taking into account the time from removal of the oven door 12 to start of measurement with the laser three-dimensional shape measuring device 20 and the oven temperature of the carbonization chamber 10.

$$(10/t)/\{(L+4)/(1.5+4)\}^2 \times T_W^4 \cdots (3)$$

A value obtained by substituting the oven temperature $T_W$ = 1150 + 273K, the distance L = 1.5 m, and the time t = 10 minutes into expression (3) is "$4.1 \times 10^{12}$". As described above, when the oven temperature of the carbonization chamber 10 is 1150°C, the distance L is 1.5 m, and the time t is 10 minutes, the laser irradiation hole and the detection hole are not deformed. Therefore, when the oven lining shape is measured after the distance L and the time t are determined in such a way that expression (3) is less than or equal to $4.1 \times 10^{12}$, deformation of the laser irradiation hole and the detection hole can be prevented. Inequality (1) can thus be derived.

To irradiate the 6-m-high oven wall with the laser 21, the laser three-dimensional shape measuring device 20 is to be installed at a distance of 1.5 m or more from the oven port 11. Due to size constraint of the platform 30, the laser three-dimensional shape measuring device 20 is to be installed within 3.0 m of the oven port 11. Therefore, the distance L from the oven port 11 to the laser three-dimensional shape measuring device 20 is to satisfy inequality (4).

$$1.5 \leq L \leq 3.0 \cdots (4)$$

Next, a result of checking the relation between the oven temperature of the carbonization chamber that can prevent deformation of the laser irradiation hole and the detection hole, the distance from the oven port 11, and time, will be described. Table 1 shows values of the left side of inequality (1) obtained under different conditions when the oven temperature of the carbonization chamber 10 is 1150°C.

[Table 1]

Oven Wall Temperature: 1150°C

| | Distance (m) | 1.0 | 1.5 | 2.0 | 2.5 | 3.0 | 3.5 |
|---|---|---|---|---|---|---|---|
| Time (min) | 1 | 5.0E+13 | 4.1E+13 | 3.4E+13 | 2.9E+13 | 2.5E+13 | 2.2E+13 |
| | 3 | 1.7E+13 | 1.4E+13 | 1.1E+13 | 9.8E+12 | 8.4E+12 | 7.4E+12 |
| | 5 | 9.9E+12 | 8.2E+12 | 6.9E+12 | 5.9E+12 | 5.1E+12 | 4.4E+12 |
| | 10 | 5.0E+12 | 4.1E+12 | 3.4E+12 | 2.9E+12 | 2.5E+12 | 2.2E+12 |
| | 15 | 3.3E+12 | 2.7E+12 | 2.3E+12 | 2.0E+12 | 1.7E+12 | 1.5E+12 |
| | 20 | 2.5E+12 | 2.1E+12 | 1.7E+12 | 1.5E+12 | 1.3E+12 | 1.1E+12 |
| | 30 | 1.7E+12 | 1.4E+12 | 1.1E+12 | 9.8E+11 | 8.4E+11 | 7.4E+11 |
| | 40 | 1.2E+12 | 1.0E+12 | 8.6E+11 | 7.3E+11 | 6.3E+11 | 5.5E+11 |
| | 50 | 9.9E+11 | 8.2E+11 | 6.9E+11 | 5.9E+11 | 5.1E+11 | 4.4E+11 |
| | 60 | 8.3E+11 | 6.8E+11 | 5.7E+11 | 4.9E+11 | 4.2E+11 | 3.7E+11 |
| | 70 | 7.1E+11 | 5.9E+11 | 4.9E+11 | 4.2E+11 | 3.6E+11 | 3.2E+11 |
| | 80 | 6.2E+11 | 5.1E+11 | 4.3E+11 | 3.7E+11 | 3.2E+11 | 2.8E+11 |
| | 90 | 5.5E+11 | 4.6E+11 | 3.8E+11 | 3.3E+11 | 2.8E+11 | 2.5E+11 |

As shown in Table 1, when the oven temperature of the carbonization chamber 10 is 1150°C, values of the left side of inequality (1) surrounded by a black border are less than or equal to $4.1 \times 10^{12}$. This result shows that when the oven temperature of the carbonization chamber 10 is 1150°C, deformation of the laser irradiation hole and the detection hole can be prevented by setting the distance L from the oven port 11 to greater than or equal to 1.5 m and less than or equal to 3.0 m, and setting the time t from removal of the oven door 12 to start of measurement of the oven lining shape to 10 minutes or longer.

Table 2 shows values of the left side of inequality (1) obtained under different conditions when the oven temperature of the carbonization chamber 10 is 1100°C.

[Table 2]

Oven Wall Temperature: 1100°C

| Distance (m) | | 1.0 | 1.5 | 2.0 | 2.5 | 3.0 | 3.5 |
|---|---|---|---|---|---|---|---|
| Time (min) | 1 | 4.3E+13 | 3.6E+13 | 3.0E+13 | 2.5E+13 | 2.2E+13 | 1.9E+13 |
| | 3 | 1.4E+13 | 1.2E+13 | 1.0E+13 | 8.5E+12 | 7.3E+12 | 6.4E+12 |
| | 5 | 8.6E+12 | 7.1E+12 | 6.0E+12 | 5.1E+12 | 4.4E+12 | 3.8E+12 |
| | 10 | 4.3E+12 | 3.6E+12 | 3.0E+12 | 2.5E+12 | 2.2E+12 | 1.9E+12 |
| | 15 | 2.9E+12 | 2.4E+12 | 2.0E+12 | 1.7E+12 | 1.5E+12 | 1.3E+12 |
| | 20 | 2.2E+12 | 1.8E+12 | 1.5E+12 | 1.3E+12 | 1.1E+12 | 9.6E+11 |
| | 30 | 1.4E+12 | 1.2E+12 | 1.0E+12 | 8.5E+11 | 7.3E+11 | 6.4E+11 |
| | 40 | 1.1E+12 | 8.9E+11 | 7.5E+11 | 6.4E+11 | 5.5E+11 | 4.8E+11 |
| | 50 | 8.6E+11 | 7.1E+11 | 6.0E+11 | 5.1E+11 | 4.4E+11 | 3.8E+11 |
| | 60 | 7.2E+11 | 5.9E+11 | 5.0E+11 | 4.2E+11 | 3.7E+11 | 3.2E+11 |
| | 70 | 6.1E+11 | 5.1E+11 | 4.3E+11 | 3.6E+11 | 3.1E+11 | 2.7E+11 |
| | 80 | 5.4E+11 | 4.4E+11 | 3.7E+11 | 3.2E+11 | 2.7E+11 | 2.4E+11 |
| | 90 | 4.8E+11 | 4.0E+11 | 3.3E+11 | 2.8E+11 | 2.4E+11 | 2.1E+11 |

As shown in Table 2, when the oven temperature of the carbonization chamber 10 is 1100°C, values of the left side of inequality (1) surrounded by a black border are less than or equal to $4.1 \times 10^{12}$. This result shows that when the oven temperature $T_W$ of the carbonization chamber 10 is 1100°C, deformation of the laser irradiation hole and the detection hole can be prevented by setting the distance L from the oven port 11 to greater than or equal to 1.5 m and less than or equal to 3.0 m, and setting the time t from removal of the oven door 12 to start of measurement of the oven lining shape to 10 minutes or longer.

Table 3 shows values of the left side of inequality (1) obtained under different conditions when the oven temperature of the carbonization chamber 10 is 1000°C.

[Table 3]

Oven Wall Temperature: 1000°C

| Distance (m) | | 1.0 | 1.5 | 2.0 | 2.5 | 3.0 | 3.5 |
|---|---|---|---|---|---|---|---|
| Time (min) | 1 | 3.2E+13 | 2.6E+13 | 2.2E+13 | 1.9E+13 | 1.6E+13 | 1.4E+13 |
| | 3 | 1.1E+13 | 8.8E+12 | 7.4E+12 | 6.3E+12 | 5.4E+12 | 4.7E+12 |
| | 5 | 6.4E+12 | 5.3E+12 | 4.4E+12 | 3.8E+12 | 3.2E+12 | 2.8E+12 |
| | 10 | 3.2E+12 | 2.6E+12 | 2.2E+12 | 1.9E+12 | 1.6E+12 | 1.4E+12 |
| | 15 | 2.1E+12 | 1.8E+12 | 1.5E+12 | 1.3E+12 | 1.1E+12 | 9.4E+11 |
| | 20 | 1.6E+12 | 1.3E+12 | 1.1E+12 | 9.4E+11 | 8.1E+11 | 7.1E+11 |
| | 30 | 1.1E+12 | 8.8E+11 | 7.4E+11 | 6.3E+11 | 5.4E+11 | 4.7E+11 |
| | 40 | 7.9E+11 | 6.6E+11 | 5.5E+11 | 4.7E+11 | 4.1E+11 | 3.5E+11 |
| | 50 | 6.4E+11 | 5.3E+11 | 4.4E+11 | 3.8E+11 | 3.2E+11 | 2.8E+11 |
| | 60 | 5.3E+11 | 4.4E+11 | 3.7E+11 | 3.1E+11 | 2.7E+11 | 2.4E+11 |
| | 70 | 4.5E+11 | 3.8E+11 | 3.2E+11 | 2.7E+11 | 2.3E+11 | 2.0E+11 |
| | 80 | 4.0E+11 | 3.3E+11 | 2.8E+11 | 2.4E+11 | 2.0E+11 | 1.8E+11 |
| | 90 | 3.5E+11 | 2.9E+11 | 2.5E+11 | 2.1E+11 | 1.8E+11 | 1.6E+11 |

As shown in Table 3, when the oven temperature of the carbonization chamber 10 is 1000°C, values of the left side of inequality (1) surrounded by a black border are less than or equal to $4.1 \times 10^{12}$. This result shows that when the oven temperature of the carbonization chamber 10 is 1000°C, deformation of the laser irradiation hole and the detection hole can be prevented by setting the distance from the oven port 11 to greater than or equal to 1.5 m and less than 2.5 m, and setting the time from removal of the oven door 12 to start of measurement of the oven lining shape to 10 minutes or longer. This result also shows that deformation of the laser irradiation hole and the detection hole can be prevented by setting the distance from the oven port 11 to greater than or equal to 2.5 m and less than or equal to 3.0 m, and setting the time from removal of the oven door 12 to start of measurement of the oven lining shape to 5 minutes or longer.

In coke production, the oven temperature of the carbonization chamber 10 is 1150°C when the coke oven produces coke at an operating ratio of 135%. An operating ratio of 135% means that a coke oven with 100 carbonization chambers performs an operation which involves pushing out coke 135 times per day for production. Since coke is not produced at an operating ratio higher than 135%, the oven temperature 1150°C is the highest oven temperature of the carbonization chamber 10. Even when the oven temperature is at this highest level and the distance from the oven port 11 is the shortest 1.5 m, deformation of the laser irradiation hole and the detection hole can be prevented by setting the time from removal of the oven door 12 to start of measurement of the oven lining shape to 10 minutes or longer. This indicates that when the time from removal of the oven door 12 to start of measurement of the oven lining shape is set to 10 minutes or longer, deformation of the laser irradiation hole and the detection hole can be reliably prevented.

If the oven temperature of the carbonization chamber 10 operating at 1000°C or above falls below 600°C, bricks in the carbonization chamber 10 contract and crack. Therefore, the measurement of the oven lining shape is preferably completed before the oven temperature at the oven port 11 falls below 600°C. Table 4 shows a result of checking the relation between the time from removal of the oven door 12 at an oven temperature of 1000°C to 1150°C and the oven temperature at the oven port 11.

[Table 4]

| Time after Removal of Oven door (min) | Oven temperature: 1000°C (Operating Ratio = 100%) | Oven temperature: 1100°C (Operating Ratio = 120%) | Oven temperature: 1150°C (Operating Ratio = 135%) |
|---|---|---|---|
| 0 | 1000 | 1100 | 1150 |
| 1 | 939 | 1019 | 1057 |
| 3 | 745 | 727 | 701 |
| 5 | 685 | 671 | 659 |

(continued)

| Time after Removal of Oven door (min) | Oven temperature: 1000°C (Operating Ratio = 100%) | Oven temperature: 1100°C (Operating Ratio = 120%) | Oven temperature: 1150°C (Operating Ratio = 135%) |
|---|---|---|---|
| 10 | 650 | 658 | 660 |
| 20 | 621 | 637 | 644 |
| 30 | 608 | 627 | 635 |
| 45 | 601 | 622 | 631 |
| 60 | 600 | 621 | 630 |
| 65 | 600 | 621 | 630 |
| 75 | 599 | 621 | 630 |

As shown in Table 4, even when the oven temperature is 1000°C (operating ratio = 100%), the oven temperature at the oven port 11 is kept at 600°C or above for up to 60 minutes after removal of the oven door 12. This result indicates that to prevent the oven temperature at the oven port 11 from falling below 600°C, the measurement of the oven lining shape using the laser three-dimensional shape measuring device 20, which is assumed to take 5 minutes, is preferably started within 60 minutes after removal of the oven door 12. Thus, even after the measurement, the oven temperature at the oven port 11 can be prevented from falling below 600°C and the bricks in the carbonization chamber 10 can be prevented from cracking.

As described above, in the coke oven lining shape measuring method according to the present embodiment, the oven temperature of the carbonization chamber 10, the time from removal of the oven door 12 to start of measurement, and the distance from the oven port 11 to the laser three-dimensional shape measuring device are determined to satisfy inequality (1), so that thermal deformation of the laser irradiation hole and the detection hole can be prevented. This makes it possible not only to measure the oven lining shape in the coke oven using the laser three-dimensional shape measuring device, but also to repair the oven wall in the coke oven on the basis of oven lining shape data obtained by the measurement.

Examples

Examples will now be described in which the oven lining shape of the carbonization chamber in the coke oven operating at an operating ratio of 120% (oven temperature: 1100°C) was measured using the laser three-dimensional shape measuring device. With the laser three-dimensional shape measuring device installed at a distance of 1.5 m from the oven port, the oven lining shape in the coke oven was measured at various lengths of time from removal of the oven door to start of measurement of the oven lining shape. Table 5 shows the time from removal of the oven door, the result of measurement, the presence of damage to the device, and the value of the left side of inequality (1).

[Table 5]

| | Time from Oven door Removal to Measurement (min) | Measurement of Oven lining shape | Damage to Device | Left Side of Inequality (1) |
|---|---|---|---|---|
| Inventive Example 1 | 10 | Completed | No | $3.6\times10^{12}$ |
| Inventive Example 2 | 15 | Completed | No | $2.4\times10^{12}$ |
| Inventive Example 3 | 20 | Completed | No | $1.8\times10^{12}$ |
| Inventive Example 4 | 30 | Completed | No | $1.2\times10^{12}$ |
| Inventive Example 5 | 45 | Completed | No | $7.9\times10^{11}$ |
| Inventive Example 6 | 60 | Completed | No | $5.9\times10^{11}$ |
| Comparative Example 1 | 3 | Failed | Yes | $1.2\times10^{13}$ |
| Comparative Example 2 | 5 | Stopped halfway | Yes | $7.1\times10^{12}$ |

Table 5 shows that in Inventive Examples 1 to 6 where the left side of inequality (1) was $4.1 \times 10^{12}$ or below, the measurement of the oven lining shape was able to be completed without damage to the laser three-dimensional shape measuring device, and no cracking of bricks in the carbonization chamber of the coke oven was observed. In Comparative Examples 1 and 2 where the left side of inequality (1) exceeded $4.1 \times 10^{12}$, the laser irradiation hole and the detection hole were deformed and the oven lining shape was not able to be measured. These results confirm that by determining the oven temperature, the time from removal of the oven door 12 to start of measurement, and the distance from the oven port in such a way as to satisfy inequality (1), the device can be prevented from being damaged and the oven lining shape can be measured with the laser three-dimensional shape measuring device. Reference Signs List

1 coke oven
10 carbonization chamber
11 oven port
12 oven door
13 oven wall
20 laser three-dimensional shape measuring device
21 laser
22 reference body
30 platform

## Claims

1. A coke oven lining shape measuring method for measuring an oven lining shape in a coke oven, the method comprising:

   installing a laser three-dimensional shape measuring device outside a carbonization chamber from which an oven door has been removed; and
   measuring an oven lining shape of the carbonization chamber with the laser three-dimensional shape measuring device,
   **characterised in that**
   the oven lining shape is measured after time from removal of the oven door to start of measurement with the laser three-dimensional shape measuring device and a distance from a oven port to the laser three-dimensional shape measuring device are determined to satisfy inequality (1),

   $$(10/t)/\{(L+4)/5.5\}^2 \times T_W^4 \leq 4.1 \times 10^{12} \cdots (1)$$

   where $T_W$ is an oven temperature (K) of the carbonization chamber, t is time (min) from removal of the oven door to start of measurement with the laser three-dimensional shape measuring device, and L is a distance (m) from the oven port to the laser three-dimensional shape measuring device.

2. The coke oven lining shape measuring method according to Claim 1, wherein the time from removal of the oven door to start of measurement with the laser three-dimensional shape measuring device is 10 minutes or longer.

3. The coke oven lining shape measuring method according to Claim 1 or Claim 2, wherein the time from removal of the oven door to start of measurement with the laser three-dimensional shape measuring device is within 60 minutes.

4. A coke oven wall repairing method for repairing an oven wall in a coke oven, the method comprising repairing the oven wall of the carbonization chamber on the basis of the oven lining shape measured by the coke oven lining shape measuring method according to Claim 1 or Claim 2.

5. A coke oven wall repairing method for repairing an oven wall in a coke oven, the method comprising repairing the oven wall of the carbonization chamber on the basis of the oven lining shape measured by the coke oven lining shape measuring method according to Claim 3.

## Patentansprüche

1. Koksofenauskleidungsformmessverfahren zum Messen einer Ofenauskleidungsform in einem Koksofen, wobei das Verfahren Folgendes umfasst:

Installieren eines Lasermessgeräts für dreidimensionale Formen außerhalb einer Koksofenkammer, von der eine Ofentür entfernt wurde; und

Messen der Ofenauskleidungsform der Koksofenkammer mit dem Lasermessgerät für dreidimensionale Formen,

**dadurch gekennzeichnet, dass**

nach einer Zeit vom Entfernen der Ofentür bis zum Beginn der Messung mit dem Lasermessgerät für dreidimensionale Formen die Ofenauskleidungsform gemessen wird und ein Abstand von einer Ofenöffnung bis zum Lasermessgerät für dreidimensionale Formen so bestimmt wird, dass diese die Ungleichung (1) erfüllen,

$$(10/t)/\{(L+4)/5,5\}^2 \times T_W^4 \leq 4,1 \times 10^{12} \ldots \quad (1)$$

wobei $T_W$ eine Ofentemperatur (K) der Koksofenkammer ist, t die Zeit (min) vom Entfernen der Ofentür bis zum Beginn der Messung mit dem Lasermessgerät für dreidimensionale Formen ist und L ein Abstand (m) von der Ofenöffnung zum Lasermessgerät für dreidimensionale Formen ist.

2. Koksofenauskleidungsformmessverfahren nach Anspruch 1, wobei die Zeit vom Entfernen der Ofentür bis zum Beginn der Messung mit dem Lasermessgerät für dreidimensionale Formen 10 Minuten oder länger beträgt.

3. Koksofenauskleidungsformmessverfahren nach Anspruch 1 oder Anspruch 2, wobei die Zeit vom Entfernen der Ofentür bis zum Beginn der Messung mit dem Lasermessgerät für dreidimensionale Formen innerhalb von 60 Minuten liegt.

4. Koksofenwandreparaturverfahren zum Reparieren einer Ofenwand in einem Koksofen, wobei das Verfahren das Reparieren der Ofenwand der Koksofenkammer auf Grundlage der mit dem Koksofenauskleidungsformmessverfahren nach Anspruch 1 oder Anspruch 2 gemessenen Ofenauskleidungsform umfasst.

5. Koksofenwandreparaturverfahren zum Reparieren einer Ofenwand in einem Koksofen, wobei das Verfahren das Reparieren der Ofenwand der Koksofenkammer auf Grundlage der mit dem Koksofenauskleidungsformmessverfahren nach Anspruch 3 gemessenen Ofenauskleidungsform umfasst.

## Revendications

1. Procédé de mesure de forme de revêtement de four à coke permettant de mesurer une forme de revêtement de four dans un four à coke, le procédé comprenant :

l'installation d'un dispositif de mesure de forme tridimensionnelle au laser à l'extérieur d'une chambre de carbonisation dont une porte de four a été retirée ; et

la mesure d'une forme de revêtement de four de la chambre de carbonisation à l'aide du dispositif de mesure de forme tridimensionnelle au laser, **caractérisé en ce que**

la forme de revêtement de four est mesurée après qu'un temps écoulé du retrait de la porte de four au début de la mesure à l'aide du dispositif de mesure de forme tridimensionnelle au laser et qu'une distance allant d'un orifice de four au dispositif de mesure de forme tridimensionnelle au laser ont été déterminés comme satisfaisant l'inégalité (1),

$$(10/t)/\{(L+4)/5,5\}^2 \times Tw^4 \leq 4,1 \times 10^{12} \ldots \quad (1)$$

où $T_w$ est une température de four (K) de la chambre de carbonisation, t est le temps (min) écoulé du retrait de la porte de four au début de la mesure à l'aide du dispositif de mesure de forme tridimensionnelle au laser, et L est une distance (m) de l'orifice de four au dispositif de mesure de forme tridimensionnelle au laser.

2. Procédé de mesure de forme de revêtement de four à coke selon la revendication 1, dans lequel le temps écoulé du retrait de la porte de four au début de la mesure à l'aide du dispositif de mesure de forme tridimensionnelle au laser est de 10 minutes ou plus.

3. Procédé de mesure de la forme de revêtement de four à coke selon la revendication 1 ou la revendication 2, dans lequel le temps écoulé du retrait de la porte de four au début de la mesure à l'aide du dispositif de mesure de forme tridimensionnelle au laser est de 60 minutes au plus.

**4.** Procédé de réparation de paroi de four à coke permettant de réparer une paroi de four dans un four à coke, le procédé comprenant la réparation de la paroi de four de la chambre de carbonisation sur la base de la forme de revêtement de four mesurée par le procédé de mesure de forme de revêtement de four à coke selon la revendication 1 ou la revendication 2.

**5.** Procédé de réparation de paroi de four à coke permettant de réparer une paroi de four dans un four à coke, le procédé comprenant la réparation de la paroi de four de la chambre de carbonisation sur la base de la forme de revêtement de four mesurée par le procédé de mesure de forme de revêtement de four à coke selon la revendication 3.

FIG. 1

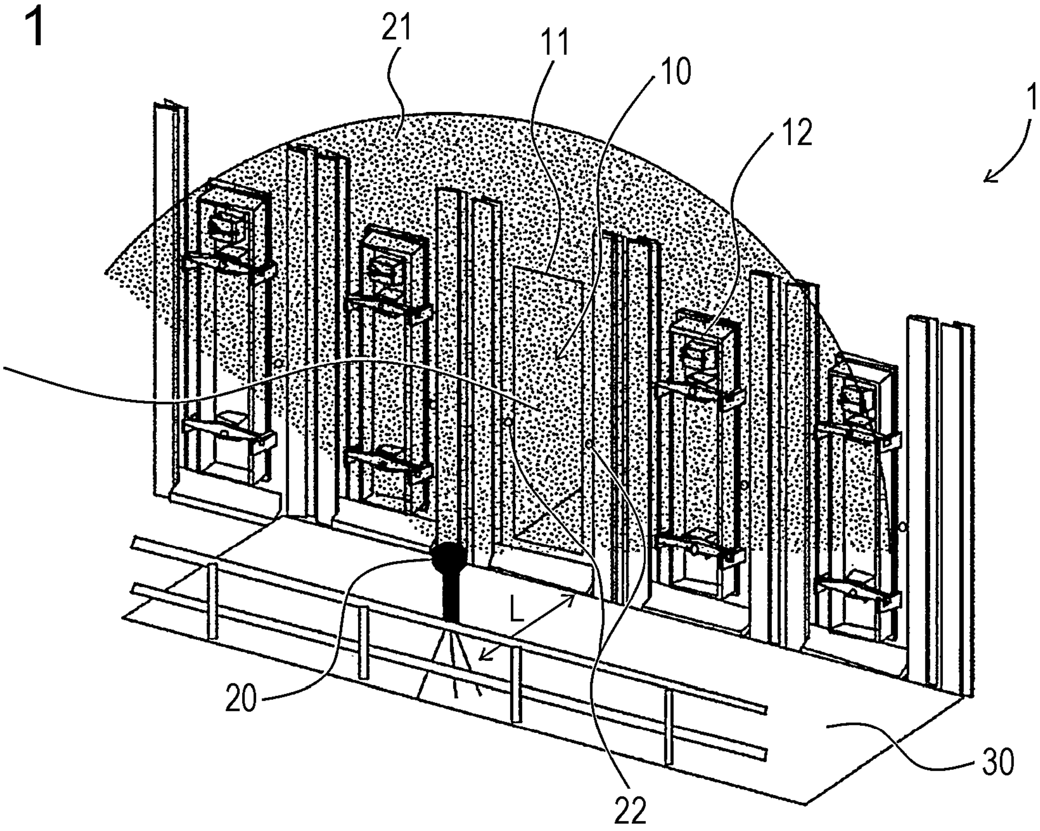
21
11
10
1
12
13
L
20
22
30

FIG. 2

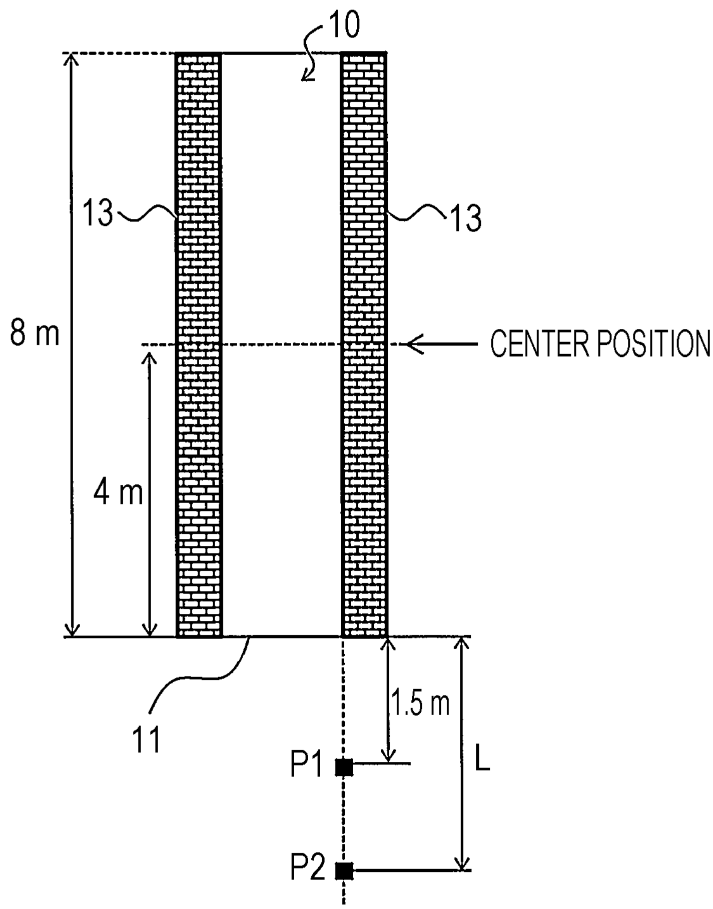
10
13
13
8 m
CENTER POSITION
4 m
11
1.5 m
P1
L
P2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013082909 A
- JP 2014218557 A